(19) Europäisches Patentamt
European Patent Office
Office européen des brevets

(11) Publication number: 0 012 578 B1

(12) # EUROPEAN PATENT SPECIFICATION

(45) Date of publication of patent specification: 08.06.83

(51) Int. Cl.³: C 08 K 3/26, C 08 L 27/00

(21) Application number: 79302816.8

(22) Date of filing: 07.12.79

(54) **Polymer compositions containing hydrated basic magnesium calcium carbonates as smoke-depressant additives.**

(30) Priority: 13.12.78 GB 4822178

(43) Date of publication of application: 25.06.80 Bulletin 80/13

(45) Publication of the grant of the patent: 08.06.83 Bulletin 83/23

(84) Designated Contracting States: BE FR GB IT NL SE

(56) References cited:
DE - A - 2 743 624
FR - A - 2 008 293
GB - A - 1 533 323
US - A - 2 033 954
US - A - 3 468 839

(73) Proprietor: Monsanto Europe S.A.
Avenue de Tervuren 270-272
B-1150 Brussels (BE)

(72) Inventor: Lambert, Jean-Luc Jules
Populieren Laan 26
Dilbeck (BE)

(74) Representative: Lunt, John Cooper et al,
Monsanto Europe S.A. Patent Department Avenue de Tervuren 270-272 Letter Box No 1
B-1150 Brussels (BE)

EP 0 012 578 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Polymer compositions containing hydrated basic magnesium calcium carbonates as smoke-depressant additives

This invention relates to polymer compositions having a smoke-depressent component incorporated therein.

In British Patent Specification 1,432,860 there are disclosed plasticized halogen-containing polymer compositions in which the plasticizer comprises a phosphate ester, and which contain certain metal compounds as "reactive modifiers". The effect of the reactive modifier is to reduce smoke and flame generation, should the polymer composition ignite, compared with similar polymer compositions containing equivalent amounts of other metal compounds, e.g. those such as calcium carbonate, conventionally used as fillers, which are not reactive modifiers. A preferred reactive modifier according to Specification 1,432,860 is magnesium carbonate, and, as indicated above, calcium compounds are not considered to be reactive modifiers.

We have now found that certain double carbonates of magnesium and calcium are very effective in reducing smoke emission from burning polymer compositions, and give results comparable with those obtained with magnesium carbonate while being considerably less expensive.

A polymer composition of the invention comprises a blend of a halogen-containing organic polymer with a plasticizer and a hydrated basic magnesium calcium carbonate.

A typical hydrated basic magnesium calcium carbonate has the empirical formula

$$[2\ MgCO_3 \cdot Mg(OH)_2 \cdot 3H_2O]\ 3CaCO_3$$

The exact molecular structures of the hydrated basic magnesium calcium carbonates are not known, but the proportions of the various elements require that they contain hydroxyl as well as carbonate anions i.e. they are basic carbonates, and also that they contain combined water. The hydrated basic magnesium calcium carbonates, are commercially available, being usually referred to as "light precipitated magnesium calcium (or calcium magnesium) carbonate".

Although dolomite is a double magnesium calcium carbonate, it is not a hydrated basic magnesium calcium carbonate and does not show the smoke-reducing properties of the latter.

For use in the compositions of the present invention, the particle size of the hydrated basic magnesium calcium carbonates should normally be of the same order as that of conventional solid fillers used in polymer compositions. Preferably all particles are less than 75 micrometres and at least 90% of the particles are less than 50 micrometres.

The hydrated basic magnesium calcium carbonates are especially effective as smoke depressants for halogen-containing polymers containing phosphate ester plasticizers, but these carbonates can also be used in halogen-containing polymers with other plasticizers.

Halogen-containing polymers which benefit from blending with hydrated basic magnesium calcium carbonates in accordance with the invention include polyvinyl chloride and copolymers of vinyl chloride with one or more other ethylenically unsaturated compounds copolymerisable therewith, preferably in an amount of not more than 40 molar percent relative to the vinyl chloride. Suitable copolymers are those wherein the comonomer is selected from other vinyl halides such as vinyl bromide and vinyl fluoride; vinyl esters such as vinyl acetate, vinyl chloroacetate and vinyl butyrate; vinyl alkyl sulfonates; vinyl ethers such as vinyl ethyl ether, vinyl isopropyl ether and vinyl chloroethyl ether; aromatic and cyclic unsaturated compounds such as styrene, the mono- and polychlorostyrenes, coumarone, indene, vinyl naphthalene, vinyl pyridine, vinyl pyrrole; acrylic acid and its derivatives such as ethyl acrylate, methyl methacrylate, ethyl methacrylate, ethyl chloroacrylate, acrylonitrile and methacrylonitrile; vinylidene compounds such as vinylidene chloride, vinylidene bromide; unsaturated hydrocarbons such as ethylene, propylene and isobutenes; allylic compounds such as allyl acetate, allyl chloride and allyl ethyl ether; conjugated ethylenically unsaturated compounds such as butadiene, isoprene, chloroprene, 2,3-dimethylbutadiene and piperylene; and esters such as diethyl maleate and diethyl fumarate.

Specific examples of vinyl chloride copolymers which may be employed in the compositions of the present invention include vinyl chloride/vinyl acetate, ethylene/vinyl chloride/vinyl acetate, and ethylene/vinyl chloride/acrylonitrile copolymers.

Similarly, other halogen-containing polymers contemplated herein include polymers of halogenated olefins, e.g. chlorinated polyethylene and chlorinated polypropylene, polymers of halogenated diolefins, e.g. chloroprene, and chlorosulfated polyolefins, e.g. chlorosulfonated polyethylene, as well as polyblends of such halogen-containing polymers with non-halogenated resins.

Plasticizers that can be used in the compositions of the invention include phthalates, for example dialkyl phthalates, and alkyl benzyl phthalates, sebacates and adipates. Preferred plasticizers are however phosphate esters, since such esters themselves have smoke-depressant properties, and mixtures of plasticizers containing at least 30% by weight of phosphate ester. Phosphate esters which can be used include trialkyl phosphates, dialkylaryl phosphate, alkyldiaryl phosphates and triaryl phosphates. The preferred phosphate esters are the trialkyl phosphates, dialkylaryl phosphates and alkyldiaryl phosphates.

Examples of trialkyl phosphates which can be used include tributyl phosphate, trihexyl phosphate, tricyclohexyl phosphate, trioctyl phosphate, tridecyl phosphate, triundecyl phosphate, tridodecyl phosphate, trihexadecyl phosphate, trioctadecyl phosphate, hexyl dioctyl phosphate, octyl didodecyl phosphate, trieicosyl phosphate and trialkyl phosphates prepared from mixtures of $C_7$—$C_9$—$C_{11}$ alcohols; examples of dialkylaryl phosphates include dibutyl phenyl phosphate, dihexyl phenyl phosphate, dioctyl phenyl phosphate, didecyl phenyl phosphate, diisodecyl phenyl phosphate, dihexadecyl phenyl phosphate, octyl dodecyl phenyl phosphate and di($C_7$—$C_9C_{11}$) alkyl phenyl phosphate; and examples of alkyldiaryl phosphate include butyl diphenyl phosphate, octyl diphenyl phosphate, decyl diphenyl phosphate, isodecyl diphenyl phosphate, dodecyl diphenyl phosphate, hexadecyl diphenyl phosphate, cyclohexyl diphenyl phosphate, and ($C_7$—$C_9$—$C_{11}$) alkyl diphenyl phosphate.

Especially preferred phosphate esters for use in the compositions of the present invention are tri-2-ethylhexyl phosphate, isodecyl diphenyl phosphate and 2-ethylhexyl diphenyl phosphate.

The amounts of the hydrated basic magnesium calcium carbonates which can be used in the compositions of the present invention depend on various factors, including the nature of the polymer, the presence or absence of other components having smoke depressant properties, and the amount of the hydrated basic magnesium calcium carbonate which can be tolerated without adversely affecting the physical properties of the composition. For most applications, a suitable amount of the hydrated basic magnesium calcium carbonate will be within the range 15 to 50 parts by weight per 100 parts by weight of polymer (PHR), more especially within the range 20 to 40 PHR. The hydrated basic magnesium calcium carbonates function as fillers as well as smoke depressants. They may be the only filler employed, but compositions within the scope of the invention may also contain conventional substantially inert fillers such as carbon black, calcium carbonate or silica and conventional flame-retardant fillers such as $Sb_2O_3$, aluminium trihydrates, or borates.

Halogen-containing polymer compositions usually contain a plasticizer in an amount of from 10 to 150 PHR, depending on the use for which the composition is required. As indicated above, the preferred phosphate ester plasticizers can be used in conjunction with other plasticizers; where such mixtures are employed, the phosphate ester component preferably constitutes at least 30% by weight, and more preferably at least 50% by weight, of the plasticizer mixture.

The polymer compositions of the invention can also contain other conventional compounding ingredients, for example stabilizers, UV absorbers and pigments.

The invention is illustrated by the following Example.

Example

The following formulations, one for each of the carbonates shown in the table below, were prepared and calendered into films 0.3 mm. thick.

| Ingredient | Parts by weight |
|---|---|
| Polyvinyl chloride | 100 |
| Alkyl diphenyl phosphate | 50 |
| Stabilizer | 2 |
| Epoxy resin | 2 |
| Carbonate | 30 |

Samples were cut from the film and mounted in an Aminco-NBS Smoke Chamber, which measures smoke generating characteristics of solid materials by the attenuation of a light beam by suspended particulate matter generated from the material undergoing pyrolytic decomposition (smouldering) or flame combustion within a closed chamber. The resulting measurement is expressed in terms of the maximum specific optical density (DM). The results given in the table below were obtained under smouldering conditions. The value for DM is inversely related to the effectiveness of the additive as a smoke depressant. Three tests, with results as shown, were carried out on the formulation containing carbonate B.

| Carbonate | A | B | C | D |
|---|---|---|---|---|
| % w/w MgO<br>% w/w CaO<br>Combined water (% w/w)<br>Particle size (micrometres) | 20.5<br>29<br>9.2<br>99.5% less than 44 | 24.6<br>24.1<br>?<br>99.5% less than 44 | 20<br>31<br>0.3<br>40 | 41—42<br><br>18<br>32 |
| DM | 52 | 39/37/46 | 76 | 45 |

A. Hydrated basic magnesium calcium carbonate, approximate formula $2\,MgCO_3 \cdot Mg(OH)_2 \cdot 3H_2O \cdot 3CaO_3$.
B. Hydrated basic magnesium calcium carbonate.
C. Dolomite $MgCa(CO_3)_2$.
D. Hydrated basic magnesium carbonate.

The results show that the hydrated basic magnesium calcium carbonates have substantially the same effectiveness as smoke depressants as the hydrated basic magnesium carbonate, and that dolomite is much less effective. Calcium carbonate would be expected to give a result similar to that obtained with dolomite.

**Claims**

1. A composition comprising a blend of halogen-containing organic polymer with a plasticizer and a smoke depressant, characterised in that the smoke depressant is a hydrated basic magnesium calcium carbonate.

2. A composition according to Claim 1 wherein the halogen-containing polymer is polyvinyl chloride or a copolymer of vinyl chloride with one or more other ethylenically unsaturated monomers in an amount of not more than 40 molar percent relative to the vinyl chloride.

3. A composition according to either of Claims 1 and 2 wherein the plasticizer is a phosphate ester or a mixture of plasticizers containing at least 30% by weight of phosphate ester.

4. A composition according to any of Claims 1 to 3 wherein the amount of the hydrated basic magnesium calcium carbonate is from 15 to 50 parts by weight per 100 parts by weight of organic polymer.

5. A composition according to any of Claims 1 to 4 wherein the hydrated basic magnesium calcium carbonate has the approximate formula

$$2\,MgCO_3 \cdot Mg(OH)_2 \cdot 3H_2O \cdot 3CaCO_3$$

**Patentansprüche**

1. Zusammensetzung, enthaltend ein Gemisch von halogenhaltigem organischen Polymer mit einem Plastifizierungsmittel und einem Mittel zur Rauchunterdrücking, dadurch gekennzeichnet, daß das Mittel zur Rauchunterdrückung ein hydratisiertes basisches Magnesium-Calciumcarbonat ist.

2. Zusammensetzung nach Anspruch 1, worin das halogenhaltige Polymer Polyvinylchlorid oder ein Copolymer von Vinylchlorid mit einem oder mehreren anderen olefinisch ungesättigten Monomeren in einer Menge von nicht mehr als 40 Mol-% relative zum Vinylchlorid ist.

3. Zusammensetzung nach einem der Ansprüche 1 und 2, worin das Plastifizierungsmittel ein Phosphatester oder ein Gemisch von Plastifzierungsmitteln, welches mindestens 30 Gew.-% Phosphatester enthält, ist.

4. Zusammensetzung nach einem der Ansprüche 1 bis 3, worin die Menge des hydratisierten basischen Magnesium-Calcium-carbonats 15 bis 50 Gew.-Teile pro 100 Gew.-Teile organischen Polymers beträgt.

5. Zusammensetzung nach einem der Ansprüche 1 bis 4, worin das hydratisierte basische Magnesium-Calciumcarbonat die angenäherte Formel

$$2\,MgCO_3 \cdot Mg(OH)_2 \cdot 3H_2O \cdot 3CaCO_3$$

aufweist.

**Revendications**

1. Composition comprenant un mélange de polymère organique halogéné avec un plastifiant et un produit diminuant la fumée, caractérisée par le fait que le produit diminuant la fumée est une carbonate de calcium et de magnésium basique hydraté.

2. Composition selon la revendication 1, dans laquelle le polymère halogéné est le chlorure de polyvinyle ou un copolymère de chlorure de vinyle avec un ou plusieurs autres monomères éthyléniquement insaturés en une quantité ne dépassant pas 40% en mole par rapport au chlorure de vinyle.

3. Composition selon chacune des revendications 1 et 2, dans laquelle le plastifiant est un ester phosphate ou un mélange de plastifiants renfermant au moins 30% en poids d'ester phosphate.

4. Composition selon l'une quelconque des revendications 1 à 3, dans laquelle la quantité du carbonate de calcium et de magnésium basique hydraté est de 15 à 50 parties en poids pour 100 parties en poids de polymère organique.

5. Composition selon l'une quelconque des revendications 1 à 4, dans laquelle le carbonate de calcium et de magnésium basique hydraté a la formule apporoximative:

$$2\,MgCO_3 \cdot Mg(OH)_2 \cdot 3H_2O \cdot 3CaCO_3$$